# EUROPÄISCHE PATENTSCHRIFT

(11) **EP 1 304 265 B1**
(45) Veröffentlichungstag und Bekanntmachung des Hinweises auf die Patenterteilung: **02.11.2005**
(21) Anmeldenummer: 02019526.9
(22) Anmeldetag: 31.08.2002
(51) Int. Cl.: B60R 5/04, B60R 21/06

(54) **Laderaumabtrennung**
Luggage compartment cover
Volet cache-bagages

(30) Priorität: 19.10.2001 DE 10151771
(43) Veröffentlichungstag der Anmeldung: 23.04.2003
(73) Patentinhaber: Dr.Ing. h.c.F. Porsche Aktiengesellschaft, 70435 Stuttgart (DE)
(72) Erfinder: Luik, Klaus, 75417 Mühlacker (DE); Fengel, Paul-Dieter, 71735 Eberdingen (DE); Metzger, Margret, 71735 Eberdingen-Hochdorf (DE); Rehberger, Hanns-Jürgen, 71292 Friolzheim (DE)

(56) Entgegenhaltungen:
- EP-A- 0 524 397
- EP-A- 0 754 594
- DE-C- 19 537 768
- PATENT ABSTRACTS OF JAPAN vol. 2000, no. 24, 11. Mai 2001 (2001-05-11) & JP 2001 191854 A (SUZUKI MOTOR CORP), 17. Juli 2001 (2001-07-17)
- PATENT ABSTRACTS OF JAPAN vol. 2000, no. 19, 5. Juni 2001 (2001-06-05) & JP 2001 030835 A (KANTO AUTO WORKS LTD), 6. Februar 2001 (2001-02-06)

## Beschreibung

Die Erfindung bezieht sich auf eine Abdeckeinrichtung für einen Zwischenraum hinter einer Rücksitzanlage und einer vertikalen und sich in Fahrzeugquerrichtung erstreckenden Trennwand eines Kraftfahrzeugs sowie einer Seitenwandverkleidung.

Aus der DE 195 37 768 C1 ist eine Abdeckvorrichtung für einen Laderaum von Kraftfahrzeugen bekannt, die zwischen einer Lehne eines Rücksitzes und einer Kassette eines Gehäuses für ein Rollo angeordnet ist. Aus der JP-A-2001-191854 ist eine Rücksitzanlage für ein Kraftfahrzeug mit einer Spaltabdeckung bekannt, die aus einem rechteckförmigen Laschenelement besteht, welches jeweils am freien Ende einer querverlaufend angeordneten Kassette für eine Gepäckraumabdeckung angelenkt ist. Dieses Laschenelement überbrückt einen Spalt zwischen einer hinteren Rücksitzlehnenfläche und einer Gepäckraumabdeckung derart, dass ein oberer Spalt zwischen der Seitenwand und einem seitlichen Bereich der Rückenlehne sowie in horizontaler Ebene zwischen der Gepäckraumabdeckung und der Rückfläche des Rücksitzes bestehen bleibt.

Aufgabe der Erfindung ist es, eine verbesserte Abdeckeinrichtung für einen Zwischenraum im Bereich einer Rücksitzanlage eines Kraftfahrzeugs zu schaffen, die einfach zu montieren ist, eine genaue Abdeckung des Zwischenraumes bzw. Spaltes gewährleistet und beim Ausbau einer die Abdeckeinrichtung tragenden Kassette Beschädigungen an dieser Abdeckeinrichtung vermieden werden.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, daß ein Spalt unterschiedlicher Breite und Länge hinter der Rücksitzanlage eines Kraftfahrzeuges und neben einer Seitenwandverkleidung von einem plattenförmigen Element der Abdeckeinrichtung an jeder Seite weitestgehend abgeschlossen wird.

Hierzu besteht die Abdeckeinrichtung aus mindestens zwei plattenförmigen Elementen, wobei jeweils ein Element am freien Ende einer querverlaufend angeordneten Kassette für eine horizontale Gepäckraumabdeckung angelenkt ist. Die plattenförmigen Elemente der Einrichtung sind in Spalten zwischen einer Rücksitzlehne, einer Seitenwandverkleidung und einer quer ausgerichteten Kassette für die vertikale Trennwand angeordnet. Durch diese plattenförmigen Elemente werden die Spalten zwischen der Rücksitzanlage, der Seitenwandverkleidung und der Cassette für die vertikale Trennwand nahezu spaltfrei abgeschlossen, so daß sich mit dem ausgezogenen Rollo für die horizontale Gepäckraumabdeckung eine weitestgehend abgeschlossene Fläche ergibt.

Damit bei Nichtverwendung und Ausbau der Cassette für das horizontale Rollo, die Abdeckeinrichtung beim Aufstellen auf dem Boden nicht beschädigt wird, sind die plattenförmigen Elemente am freien Ende der Cassette um eine erste quer verlaufende Schwenkachse an der Cassette und um eine hierzu um 90° versetzt angeordnete zweite in Fahrzeuglängsrichtung verlaufende Schwenkachse zwischen der Lasche und dem plattenförmigen Element verschwenkbar. Durch diese Schwenkbarkeit der Elemente kann die Cassette aufrecht hingestellt werden, wobei sich die Elemente wegschwenken können und nicht beschädigt werden.

Insbesondere bestehen die plattenförmigen Elemente aus einer sich in Fahrzeuglängsrichtung erstreckenden fingerartigen Lasche zwischen einer Seite der Rückenlehne sowie der Seitenwandverkleidung und einer anschließenden rechteckförmigen Abdeckplatte zwischen der Cassette und der Rückwand der Rückenlehne. Durch diese Ausbildung der plattenförmigen Elemente wird auch der Spalt zwischen der Sitzlehne und der Seitenwand des Fahrzeugs verschlossen, wobei der weitere Spalte zwischen der Rücksitzlehne und der Cassette durch einen schmalen Abdeckstreifen verschlossen wird, der mit den plattenförmigen Elementen verbunden ist. Damit eine Schwenkbarkeit der Elemente zur Cassette erhalten bleibt, ist der Abdeckstreifen zwischen den plattenförmigen Elementen mittels einer Einprägung schwenktechnisch getrennt.

Ein Ausführungsbeispiel der Erfindung ist in den Zeichnungen dargestellt und wird im folgenden näher dargestellt.

Es zeigen:
- Fig. 1: eine Ansicht auf die Abdeckeinrichtung in Fahrtrichtung von der linken Seite des Fahrzeugs her gesehen durch eine Seitenfensteröffnung im Fahrzeugaufbau,
- Fig. 2: eine Ansicht auf die Abdeckeinrichtung von hinten her in Fahrtrichtung gesehen,
- Fig. 3: eine Ansicht auf die Abdeckeinrichtung in teilweise geschwenkter Stellung und
- Fig. 4: eine Ansicht auf die aufgestellte Cassette mit in den Schwenkachsen verschwenkten plattenförmigen Element.

Eine Abdeckeinrichtung 1 für Spalte 2, 2a, 2b insbesondere zwischen einer Rücksitzanlage 3, einer Cassette 4 für ein horizontales Rollo 5 und einer Cassette 6 für eine vertikale Trennwand 7 sowie der Seitenverkleidung 11 besteht im wesentlichen aus jeweils einem endseitig der Cassette 4 angelenktem plattenförmigen Element 8, 9 sowie einem querverlaufend angeordneten Abdeckstreifen 10 zwischen den Elementen 8 und 9.

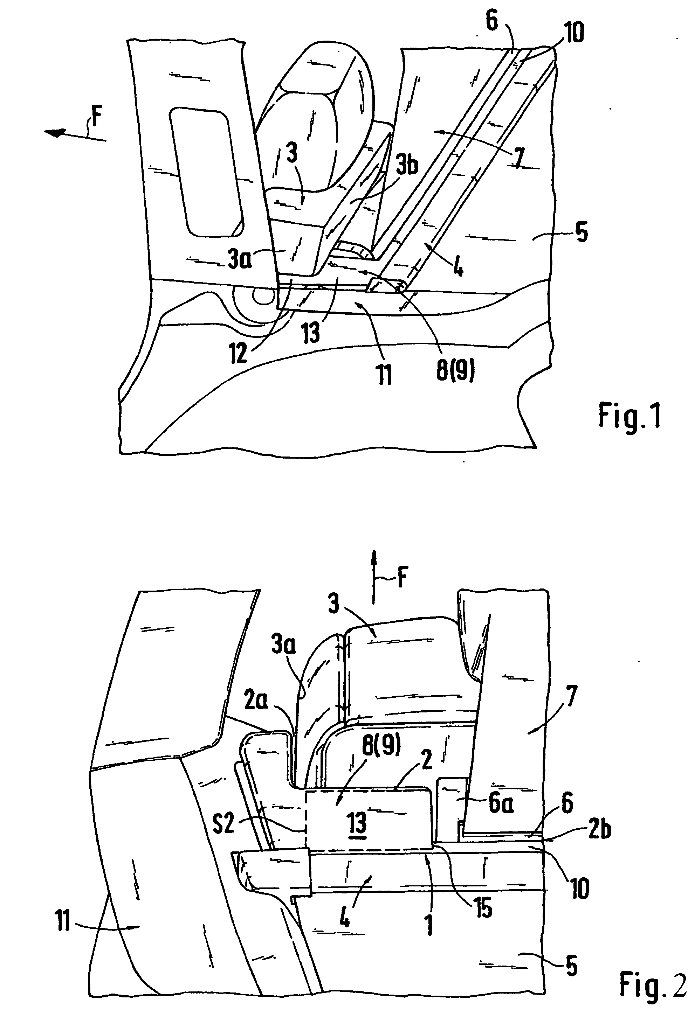

Wie insbesondere aus den Fig. 1 und 2 zu erkennen ist, besteht das plattenförmige Element 8, 9 zur Spaltabdeckung aus einer fingerartigen länglichen schmalen Lasche 12 und einer anschließenden rechteckförmigen Platte 13. Die fingerartige Lasche 12 erstreckt sich im Spalt 2a zwischen einer Seite 3a der Rücksitzanlage 3 und der Seitenverkleidung 11 des Fahrzeugs. Die anschließende rechteckförmige Platte 13 erstreckt sich bis zur Cassette 4 und schließt den weiteren Spalt 2 zwischen der Cassette 4, der Seitenwandverkleidung 11 und der Cassette 6 und einem Kopfteil 6a der Cassette ab. Desweiteren wird ein Spalt 2b zwischen der Cassette 6 und der weiteren Cassette 4 durch den Abdeckstreifen 10 verschlossen. Durch diese Abdeckeinrichtung 1 werden somit verschieden große und sich in Quer- und Längsrichtung des Fahrzeugs angeordneten Spalte 2, 2a und 2b abgedeckt, indem die Cassette 4 ins Fahrzeug eingesetzt und sich die plattenförmigen Elemente 8, 9 entsprechend auf die Seitenverkleidung ablegen.

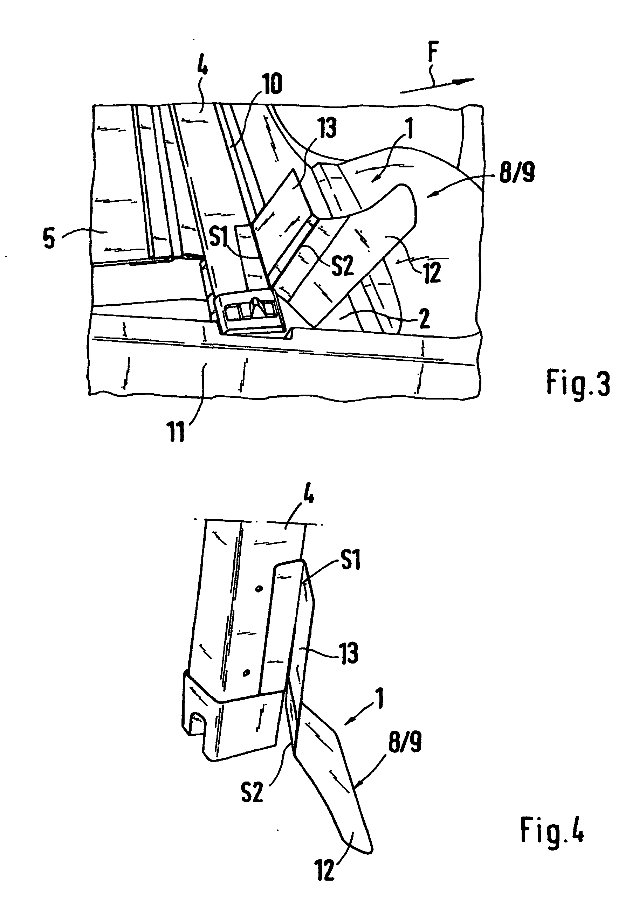

Damit bei einem Ausbau der Cassette 4 und beim Abstellen am Boden die Abdeckeinrichtung 1 bzw. die überstehenden plattenförmigen Elemente 8, 9 nicht beschädigt werden, ist jedes Element 8, 9 über zwei Schwenkachsen S1 und S2 angelenkt. Die Schwenkachse S1 ist im Verbindungsbereich zur Cassette 4 und die weitere Schwenkachse S2 ist um 90° verdreht zwischen der fingerartigen Lasche 12 und der rechteckförmigen Platte 13 vorgesehen, so daß wie Fig. 4 näher zeigt, die Cassette 4 aufgestellt werden kann und die plattenförmigen Elemente 8, 9 sich elastisch wegschwenken können. Die Schwenkachsen S1 und S2 werden von sogenannten Filmscharnieren gebildet. Damit die plattenförmigen Elemente 8, 9 ohne Behinderung durch den Abdeckstreifen 10 verschwenkbar sind, kann zwischen der rechteckförmigen Platte 13 und dem Abdeckstreifen 10 eine Einprägung 15 vorgesehen sein, die ein Verschwenken der plattenförmigen Elemente 8, 9 nicht behindert.

## Patentansprüche

1. Abdeckeinrichtung für einen Zwischenraum hinter einer Rücksitzanlage (3) und einer vertikalen sich in Fahrzeugquerrichtung erstreckenden Trennwand (7) eines Kraftfahrzeugs sowie einer Seitenwandverkleidung (11), **dadurch gekennzeichnet, dass** die Abdeckeinrichtung (1) aus mindestens zwei plattenförmigen Elementen (8, 9) besteht und jeweils ein Element (8 oder 9) am freien Ende einer querverlaufend angeordneten Kassette (4) für eine horizontale Gepäckraumabdeckung (5) angelenkt ist und die plattenförmigen Elemente (8, 9) an jeder Seite in Spalten (2, 2a, 2b) zwischen einer Rücksitzlehne (3), einer Seitenwandverkleidung (11) und einer quer ausgerichteten Kassette (6) für die vertikale Trennwand (7) angeordnet sind, und dass das plattenförmige Element (8, 9) jeweils aus einer sich in Fahrzeuglängsrichtung erstreckenden fingerartigen Lasche (12) zwischen einer Seite der Rückenlehne (3a) sowie der Seitenwandverkleidung (11) und einer anschließenden rechteckförmigen Abdeckplatte (13) zwischen der Kassette (4) und der Rückwand (3b) der Rücksitzlehne (3) besteht.

2. Abdeckeinrichtung nach Anspruch 1, **dadurch gekennzeichnet, dass** die plattenförmigen Elemente (8, 9) am freien Ende der Kassette (4) um eine erste querverlaufende Schwenkachse (S1) an der Kassette (4) und um eine hierzu um 90° verdreht angeordnete zweite in Fahrzeuglängsrichtung verlaufende Schwenkachse (S2) zwischen der Lasche (12) und der Abdeckplatte (13) verschwenkbar sind.

3. Abdeckeinrichtung nach den Ansprüchen 1 oder 2, **dadurch gekennzeichnet, dass** zwischen den plattenförmigen Elementen (8, 9) jeder Seite ein querverlaufender Abdeckstreifen (10) für einen Spalt (2b) zwischen der vertikalen Trennwand (7) und der Kassette (6) vorgesehen ist.

4. Abdeckeinrichtung nach einem oder mehreren der vorhergehenden Ansprüche, **dadurch gekennzeichnet, dass** die Schwenkachse (S1, S2) an der Verbindung zur Kassette (4) und zwischen der fingerartigen Lasche (12) und der rechteckförmigen Abdeckplatte (13) aus Filmscharnieren bestehen.

5. Abdeckeinrichtung nach einem oder mehreren der Ansprüche, **dadurch gekennzeichnet, dass** die rechteckförmige Abdeckplatte (13) zum Abdeckstreifen (10) durch eine Einprägung (5) geschwächt ist.

## Claims

1. A covering means for a space behind a rear-seat arrangement (3) and a vertical, transversely extending partition (7) of a motor vehicle and a side-panel lining (11), **characterised in that** the covering means (1) comprises at least two plate-type members (8, 9), and a respective member (8 or 9) is articulated at the free end of a transversely extending cassette (4) for a horizontal luggage-compartment cover (5), and the plate-type members (8, 9) are arranged on each side in gaps (2, 2a, 2b) between a rear-seat backrest (3), a side-panel lining (11) and a transversely arranged cassette (6) for the vertical partition (7), and **in that** each plate-type member (8, 9) comprises a finger-like tongue (12) extending in the longitudinal direction of the vehicle between one side of the seat back (3a) and the side-panel lining (11), and an adjacent, rectangular cover plate (13) between the cassette (4) and the rear wall (3b) of the rear-seat backrest (3).

2. A covering means according to claim 1, **characterised in that** the plate-type members (8, 9) at the free end of the cassette (4) are pivotable about a first, transversely extending pivoting axis (S1) on the cassette (4) and about a second pivoting axis (S2) arranged at 90° thereto and extending in the longitudinal direction of the vehicle between the tongue (12) and the cover plate (13).

3. A covering means according to claim 1 or 2, **characterised in that** a transversely extending cover strip (10) for a gap (2b) between the vertical partition (7) and the cassette (6) is provided between the plate-type members (8, 9) of each side.

4. A covering means according to one or more of the preceding claims, **characterised in that** the pivoting axes (S1, S2) at the junction with the cassette (4) and between the finger-like tongue (12) and the rectangular cover plate (13) comprise film hinges.

5. A covering means according to one or more of the claims, **characterised in that** the rectangular cover plate (13) is weakened at the transition to the cover strip (10) by an impression (5) [*sic* - 15].

## Revendications

1. Dispositif de recouvrement d'un espacement situé derrière un dossier de siège arrière (3) et une cloison (7) verticale d'un véhicule automobile, laquelle s'étend dans la direction transversale du véhicule, et un habillage de paroi latérale (11), **caractérisé en ce que** le dispositif de recouvrement (1) est constitué d'au moins deux éléments (8, 9) en forme de plaque et un élément (8 ou 9) respectif est articulé à l'extrémité libre d'un caisson (4) disposé transversalement pour un recouvrement horizontal (5) d'un coffre à bagages et les éléments (8, 9) en forme de plaque sont disposés de chaque côté dans des fentes (2a, 2b) entre un dossier de siège arrière (3), un habillage de paroi latérale (11) et un caisson (6) orienté transversalement pour la cloison verticale (7), et **en ce que** l'élément (8, 9) en forme de plaque est constitué d'une patte (12) de type doigt s'étendant dans la direction longitudinale du véhicule, entre un côté du dossier (3a) et l'habillage de paroi latérale (11) et une plaque de recouvrement (13) de forme rectangulaire attenante entre la cassette (4) et la paroi arrière (3b) du dossier (3) du siège arrière.

2. Dispositif de recouvrement selon la revendication 1, **caractérisé en ce que** les éléments (8, 9) en forme de plaque peuvent pivoter à l'extrémité libre du caisson (4), autour d'un premier axe de pivotement (S1) s'étendant transversalement sur le caisson (4) et autour d'un deuxième axe de pivotement (S2) s'étendant dans la direction longitudinale du véhicule, disposé tourné de 90° par rapport au premier, entre la patte (12) et la plaque de recouvrement (13).

3. Dispositif de recouvrement selon les revendications 1 ou 2, **caractérisé en ce qu'**il est prévu entre les éléments (8, 9) en forme de plaque de chaque côté, une bande de recouvrement (10) s'étendant transversalement pour une fente (2b) située entre la cloison verticale (7) et la cassette (6).

4. Dispositif de recouvrement selon une ou plusieurs des revendications précédentes, **caractérisé en ce que** l'axe de pivotement (S1, S2) est constitué de films-charnières au droit de la liaison avec la cassette (4) et entre la patte (12) de type doigt et la plaque de recouvrement (13) de forme rectangulaire.

5. Dispositif de recouvrement selon une ou plusieurs des revendications, **caractérisé en ce que** la plaque de recouvrement (13) de forme rectangulaire est affaiblie par une empreinte (5) pour donner la bande de recouvrement (10).
